# EUROPEAN PATENT APPLICATION

(11) **EP 4 803 462 A1**
(43) Date of publication of application: **09.09.2026**
(21) Application number: 24885479.6
(22) Date of filing: 18.10.2024
(51) Int. Cl.: B65H 19/12, B41J 15/04

(54) **LAMINATING DEVICE**

(30) Priority: 31.10.2023 JP 2023187228
(71) Applicant: Brother Kogyo Kabushiki Kaisha, Nagoya-shi, Aichi 467-8561 (JP)
(72) Inventor: SAKAI, Ryosuke, Nagoya-shi, Aichi 4678562 (JP); OOKA, Kazuaki, Nagoya-shi, Aichi 4678562 (JP); WANG, Yuwen, Nagoya-shi, Aichi 4678562 (JP)
(74) Representative: J A Kemp LLP
(86) International application number: PCT/JP2024/037161
(87) International publication number: WO 2025/094705

(57) **Abstract**

Means by which two rolls independently mountable can be replaced in a narrow space is provided. A laminating apparatus 1 includes: a recording part 30 configured to record an image on a first member 101 drawn out from a first roll 111; a bonding part 50 configured to bond the first member 101 with the image recorded in the recording part 30 and a second member 102 drawn out from a second roll 121; and a housing 11 having an opening 17 defined at an upper portion of the housing, the housing accommodating the recording part 30 and the bonding part 50. The first roll 111 and the second roll 121 are mountable to a first position 71 and a second position 72 in the housing 11, respectively, from an outside of the housing 11 through the opening 17.

## Description

### TECHNICAL FIELD

The present invention relates to a laminating apparatus for bonding multiple members together.

### BACKGROUND ART

Laminating apparatus is known that records an image onto a first member drawn out from a first roll and then bonds the first member with the recorded image and a second member drawn out from a second roll together (for example, Patent Literature 1).

In an apparatus described in Patent Literature 1, a printing part forms a print image on a recording medium drawn out from a recording medium roll. The recording medium with the formed print image is cut to a predetermined length at a first cutting part, conveyed to a laminate processing part, and then overlapped with a laminate member, drawn out from a laminate member roll, by guide rolls in the laminate processing part. The recording medium and the laminate member overlapped with each other are heated by a pressing and heating rolls and cut at a second cutting part. The recording medium roll, the recording medium, the laminate member roll, and the laminate member correspond to a first roll, a first member, a second roll, and a second member, respectively.

### [Citation List]

### [Patent Literature]

Patent Literature 1: Japanese Patent Application Laid-open No. 2003-211593

### SUMMARY

### [Technical Problem]

Regarding an apparatus configured such that a roll is to be mounted to the apparatus, a configuration in which the roll will be mounted to the apparatus via a side surface of the apparatus is known. However, a laminating apparatus having such configuration requires wide space for replacing a roll, leading to a problem of limited installation locations.

The present invention has been made in view of the above situation, and a purpose of the present invention is to provide means by which two rolls, which can be mounted individually to an apparatus, can be replaced in a narrow space.

### [Solution to Problem]

(1) A laminating apparatus of the present invention includes: a recording part configured to record an image on a first member drawn out from a first roll; a bonding part configured to bond the first member with the image recorded in the recording part and a second member drawn out from a second roll; and a housing having an opening defined at an upper portion of the housing, the housing accommodating the recording part and the bonding part. The first roll and the second roll are mountable to a first position and a second position in the housing, respectively, from an outside of the housing through the opening.
   According to the laminating apparatus described above, since two rolls can be individually mountable through the opening from a position above the housing, a user can replace two rolls which are independently mountable, in a narrow space.
(2) Preferably, the first roll may have a first shaft around which the first member is wound, the first roll being mountable to the first position in a posture that the first shaft extends in a horizontal direction, and the second roll may have a second shaft around which the second member is wound, the second roll being mountable to the second position in a posture that the second shaft extends in a horizontal direction.
(3) Preferably, the first roll may be mountable to the first position in a state that the first roll is accommodated in a first cartridge having a first handle, and the second roll may be mountable to the second position in a state that the second roll is accommodated in a second cartridge having a second handle.
(4) Preferably, at least a portion of the first handle may be located above the opening, in a state that the first roll is mounted to the first position, and at least a portion of the second handle may be located above the opening, in a state that the second roll is mounted to the second position.
(5) Preferably, the housing may have a front wall in which an operation part and a discharge port are disposed, the discharge port being configured to discharge a finished product in which the first member and the second member are bonded to each other, the first handle may be located between the front wall and the first shaft in a front-rear direction, in a state that the first roll is mounted to the first position, the front-rear direction crossing an up-down direction and the front wall, and the second handle may be located between the front wall and the second shaft in the front-rear direction, in a state that the second roll is mounted to the second position.
(6) Preferably, a cartridge being one of the first cartridge and the second cartridge may include: a biasing member configured to bias the cartridge in an orientation along a first direction crossing the up-down direction and the front-rear direction; and a handle being one of the first handle and the second handle. The biasing member and the handle may be located at a same side in the front-rear direction, relative to a shaft around which a member accommodated in the cartridge is wound, in a state that the first roll is mounted to the first position and the second roll is mounted to the second position.
(7) Preferably, the housing may have a front wall in which an operation part and a discharge port are disposed, the discharge port being configured to discharge a finished product in which the first member and the second member are bonded to each other, and the second roll may be located between the front wall and the first roll in a front-rear direction crossing an up-down direction and the front wall, in a state that the first roll is mounted to the first position and the second roll is mounted to the second position.
(8) Preferably, the first shaft may be located above the second shaft in the up-down direction in the state that the first roll is mounted to the first position and the second roll is mounted to the second position.
(9) Preferably, at least a portion of the first roll mounted to the first position may be located above the opening, and at least a portion of the second roll mounted to the second position may be located above the opening.
(10) Preferably, the laminating apparatus may further include a cover configured to cover: a portion, of the first roll, located above the opening in a state that the first roll is mounted to the first position; a portion, of the second roll, located above the opening in a state that the second roll is mounted to the second position; and the opening.
(11) Preferably, the first shaft and the second shaft may be located above the recording part and the bonding part in an up-down direction, in a state that the first roll is mounted to the first position and the second roll is mounted to the second position.
(12) Preferably, the housing may have a front wall in which an operation part and a discharge port are disposed, the discharge port being configured to discharge a finished product in which the first member and the second member are bonded to each other. The laminating apparatus may further include: a first conveyance route configured to convey the first member drawn out from the first roll mounted to the first position via a position below the first roll in an up-down direction and a position in rear of the first shaft in a front-rear direction crossing the up-down direction and the front wall; and a second conveyance route configured to convey the second member drawn out from the second roll mounted to the second position via a position below the second roll in the up-down direction and a position in front of the second shaft in the front-rear direction.
(13) Preferably, the housing may have a front wall in which an operation part and a discharge port are disposed, the discharge port being configured to discharge a finished product in which the first member and the second member are bonded to each other, and the first member wound in the first roll may be drawn out from a position in front of the first roll in a front-rear direction crossing an up-down direction and the front wall, in a state that the first roll is mounted to the first position.
(14) Preferably, the laminating apparatus may further include a conveyance route configured to convey the first member drawn out from the first roll mounted to the first position; and a conveyance roller disposed upstream in the conveyance route of the recording part. A horizontal distance between the first shaft and the second shaft may be shorter than a horizontal distance between the conveyance roller and the bonding part, in a state that the first roll is mounted to the first position and the second roll is mounted to the second position.
(15) Preferably, a whole of the first roll mounted to the first position and a whole of the second roll mounted to the second position may be located below the opening.
(16) Preferably, the first roll may be attachable to and detachable from the first position in a state that the second roll is mounted to the second position, and the second roll may be attachable to and detachable from the second position in a state that the first roll is mounted to the first position.
(17) Preferably, the first roll and the second roll may be mountable to the first position and the second position, respectively, through the opening being a single opening from the outside of the housing.

### [Advantageous Effects of Invention]

According to the present invention, two rolls which are independently mountable can be replaced in a narrow space.

### BRIEF DESCRIPTION OF DRAWINGS

FIG. 1(A) is an exterior perspective view of a laminating apparatus 1 according to an embodiment of the present invention, and FIG. 1(B) is a schematic cross-sectional view of a laminate finished product 100 produced by the laminating apparatus 1.
FIG. 2 is a longitudinal sectional view of the laminating apparatus 1.
FIG. 3 is an exterior perspective view of the laminating apparatus 1 illustrating a state that a cover 12 is opened.
FIG. 4 is a block diagram of the laminating apparatus 1.
FIG. 5 is a view illustrating mounting positions for a first roll 111 and a second roll 121 in the laminating apparatus 1.
FIG. 6 is a longitudinal sectional view of the laminating apparatus 1 as viewed oppositely from FIG. 2
FIG. 7 is a view illustrating positions of springs 118, 128 of the laminating apparatus 1.
FIG. 8 is a flowchart illustrating a laminating process performed by a controller 90 of the laminating apparatus 1.
FIG. 9 is a longitudinal sectional view of a laminating apparatus 2 according to a modification.

### DESCRIPTION OF EMBODIMENTS

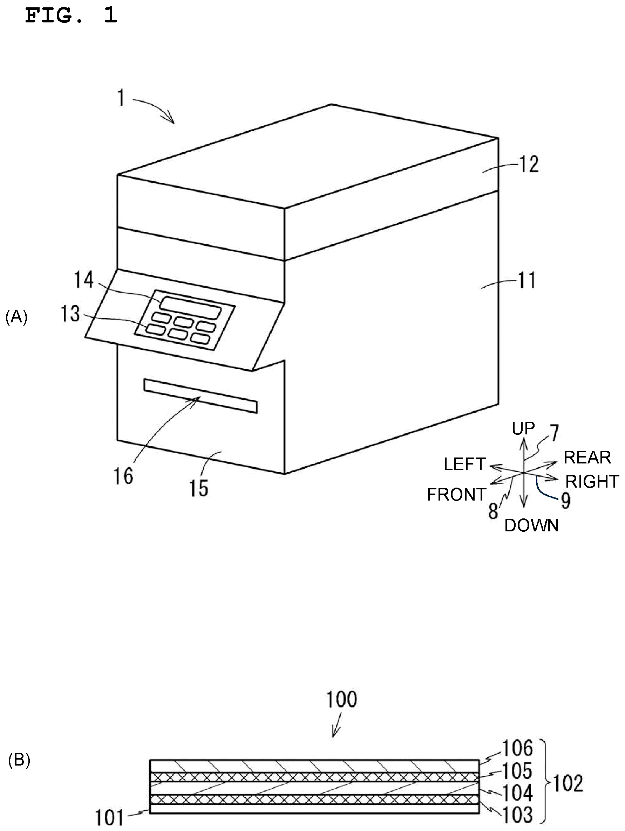

The laminating apparatus 1 according to an embodiment of the present invention will be described below. Note that an embodiment described below is merely an example of the present invention, and it goes without saying that the embodiment of the present invention can be appropriately modified within a scope in which a gist of the present invention is not changed. In the following description, progress from a start point to an end point of an arrow is referred to as an "orientation" and comings and goings on a line connecting the start point and the end point of the arrow is referred to as a "direction". Furthermore, an up-down direction 7 is defined with respect to a state that the laminating apparatus 1 is installed for use (a state illustrated in FIG. 1(A)). A front-rear direction 8 is defined such that a surface on which an operation part 13 and a display part 14 are disposed is defined as a front surface. A left-right direction 9 is defined viewing the laminating apparatus 1 from the front. The up-down direction 7, the front-rear direction 8, and the left-right direction 9 are orthogonal to one another.

### Outline of Laminating apparatus 1

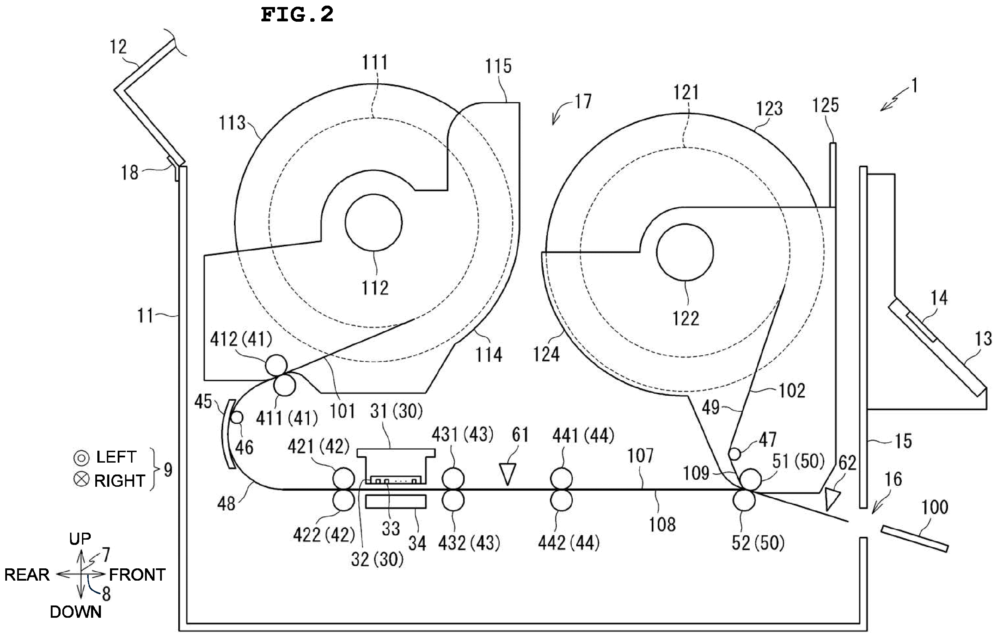

As illustrated in FIG. 1(A), the laminating apparatus 1 according to the embodiment includes a housing 11 and a cover 12. The housing 11 has a rectangular parallelepiped box shape without an upper surface. As illustrated in FIG. 2, the housing 11 has an opening 17 at an upper portion of the housing 11. The cover 12 is located above the housing 11 and closes the opening 17. A rear wall of the housing 11 and a rear wall of the cover 12 are connected by a hinge 18.

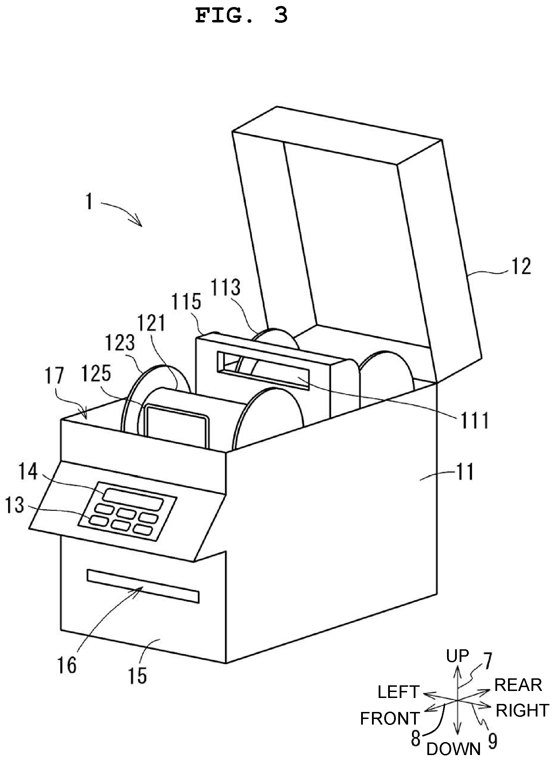

A user performs an operation to open the cover 12 and an operation to close the cover 12. In a state that the cover 12 is closed (FIG. 1(A)), the housing 11 and the cover 12 define an internal space of the laminating apparatus 1. Various components of the laminating apparatus 1 (details will be described below) are disposed in the internal space of the laminating apparatus 1. In a state that the cover 12 is open (see FIG. 3), a user can replace a roll of the laminating apparatus 1.

The operation part 13 and the display part 14 are disposed on a front wall 15 of the housing 11. On the front wall 15 of the housing 11, a discharge port 16 is disposed below the operation part 13 and the display part 14. The laminating apparatus 1 produces a laminate finished product 100 by bonding two types of members together. Note that the laminate finished product 100 is an example of a finished product.

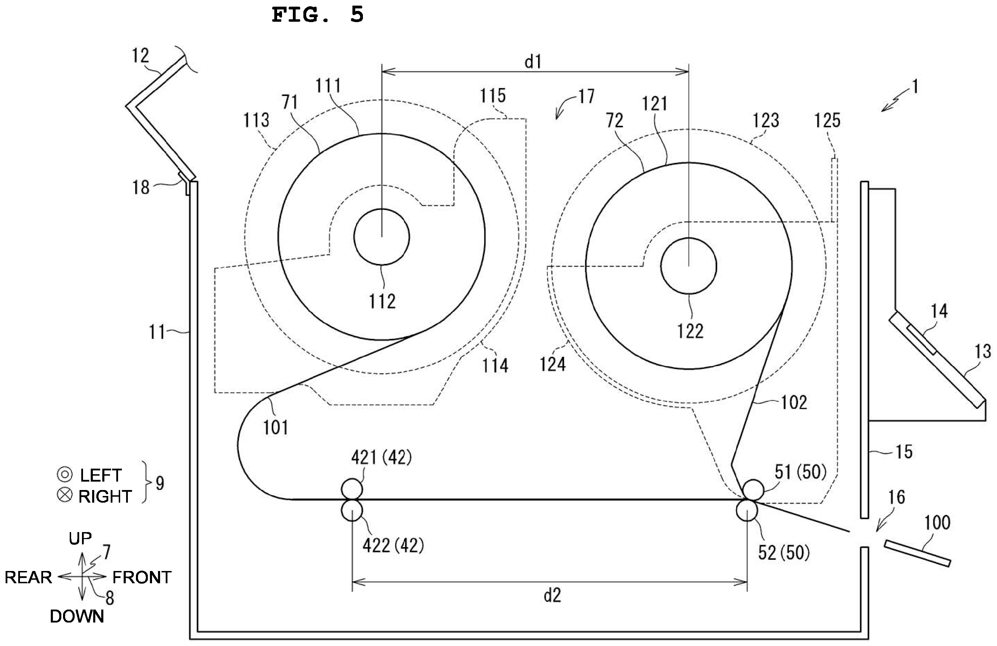

A tape-like first member 101 and a tape-like second member 102 are supplied to the laminating apparatus 1. As illustrated in FIG. 2 and FIG. 3, a first member 101 is wound around a first shaft 112 having a cylindrical shape with a flange 113 to form a first roll 111. The first roll 111 is mounted to a first position 71 (see FIG. 5) of the laminating apparatus 1 in a state that the first roll 111 is accommodated in a first cartridge 114. The second member 102 is wound around a second shaft 122 having a cylindrical shape with a flange 123 to form a second roll 121. The second roll 121 is mounted to a second position 72 (see FIG. 5) of the laminating apparatus 1 in a state that the second roll 121 is accommodated in a second cartridge 124.

The first member 101 is, for example, a transparent film. As illustrated in FIG. 1(B), the second member 102 is a member having an adhesive layer on at least one surface. The second member 102 is, for example, a backing paper having a first adhesive layer 103 on one surface (a surface facing the first member 101 in the laminate finished product 100) of a tape layer 104 and a second adhesive layer 105 on the other surface of the tape layer 104. A release sheet 106 is disposed on the opposite side of the tape layer 104 with respect to the second adhesive layer 105.

A material of the first member 101 and a material of the second member 102 may be any material. The second member 102 may be, for example, a resin member such as PET, PVC (polyvinyl chloride), a synthetic paper such as YUPO (registered trademark), or a metal member. The second member 102 may be transparent or opaque. The first member 101 and the second member 102 may have an adhesive layer on one surface, on the other surface, on both surfaces, or on neither surface. In a case where materials without an adhesive layer is used, the first member 101 and the second member 102 may be bonded together after an adhesive is applied, or may be bonded together by, for example, heat sealing or pressure bonding.

In FIG. 2, a recording surface 107 is a surface of the first member 101 on which an image will be recorded. A back surface 108 is a surface of the first member 101 opposite the recording surface 107. A bonding surface 109 is a surface of the second member 102 that has the first adhesive layer 103.

The laminating apparatus 1 bonds the first member 101 and the second member 102 by bringing the recording surface 107 of the first member 101 and the bonding surface 109 of the second member 102 into close contact. The laminating apparatus 1 cuts the bonded members into a predetermined size. Thus, the laminate finished product 100 illustrated in FIG. 1(B) is produced. The produced laminate finished product 100 is discharged from the discharge port 16.

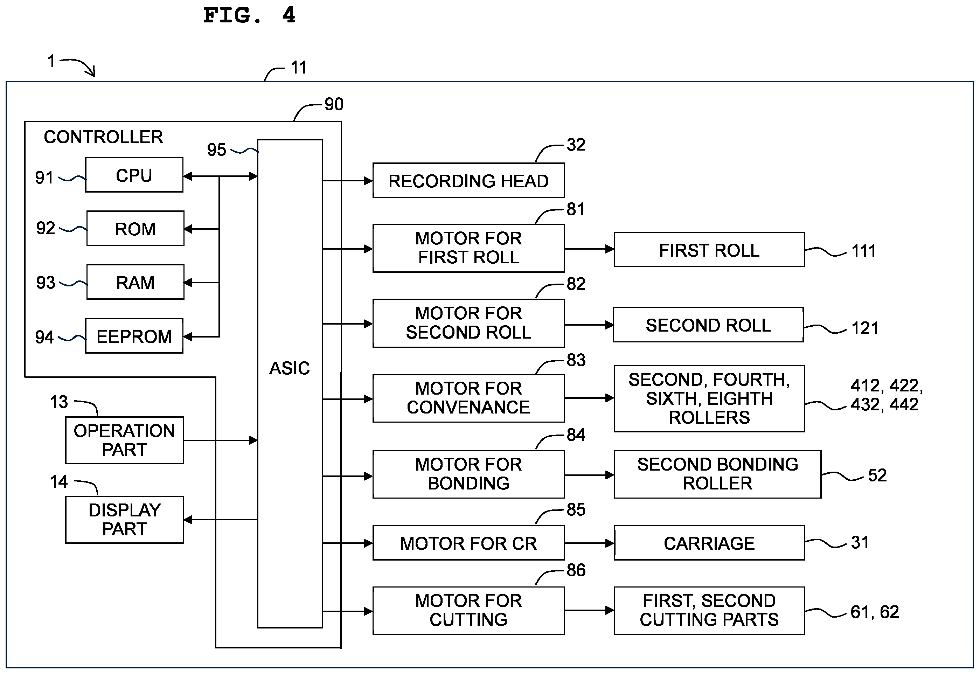

As illustrated in FIG. 2, the laminating apparatus 1 includes a recording part 30, a first to fourth conveyance rollers 41 to 44, a bonding part 50, a first cutting part 61, and a second cutting part 62. The laminating apparatus 1 further includes a controller 90 and various motors (see FIG. 4). Guide members (not illustrated) supporting the first member 101 are disposed at required positions in the housing 11. With this configuration, a first conveyance route 48 extending from the first roll 111 to the second cutting part 62 via the recording part 30, the first cutting part 61, and the bonding part 50 is defined. Further, a second conveyance route 49 extending from the second roll 121 to the second cutting part 62 via the bonding part 50 is defined. The first conveyance route 48 is an example of a conveyance route.

### First Cartridge 114 and Second Cartridge 124

The first cartridge 114 accommodates the first roll 111 in which the first member 101 is wound. The first roll 111 is attachable to and detachable from the first cartridge 114. The second cartridge 124 accommodates the second roll 121 in which the second member 102 is wound. The second roll 121 is attachable to and detachable from the second cartridge 124.

In a case where a user replaces the first roll 111, the user opens the cover 12 and removes the first cartridge 114 from the housing 11. The user removes an old first roll 111 from the removed first cartridge 114 and inserts a new first roll 111 into the first cartridge 114. The user then mounts the first cartridge 114, with the first roll 111 replaced, to a predetermined position in the housing 11. The user performs similar operation when replacing the second roll 121. With those operations, the first roll 111 and the second roll 121 are mounted to a first position 71 and a second position 72 in the housing 11, respectively. The first member 101 is drawn out from the first roll 111, and the second member 102 is drawn out from the second roll 121.

As described below, the first cartridge 114 has one of two rollers (the second roller 412) constituting first convenance rollers 41. The second cartridge 124 has one of two rollers (a first bonding roller 51) constituting the bonding part 50.

### Recording part 30

The recording part 30 is disposed downstream in the first convenance route 48 of the first roll 111. The recording part 30 is disposed below the first roll 111 and the second roll 121 in the up-down direction 7, and disposed in rear of the first cutting part 61 in the front-rear direction 8. The recording part 30 includes a carriage 31 and a recording head 32. Two guide rails (not illustrated) which extend in the left-right direction 9 and both ends of each of which are fixed to the housing 11 or to members fixed to the housing 11 are disposed in the housing 11. The carriage 31 is mounted on the two guide rails. The carriage 31 receives driving force from a motor for CR 85 (see FIG. 4) and moves in the left-right direction 9.

The recording head 32 is mounted on the carriage 31. A bottom surface of the recording head 32 has a plurality of nozzles 33. As the carriage 31 moves, the recording head 32 moves in the left-right direction 9. A platen 34 is disposed below a movement range of the carriage 31. The recording head 32 ejects ink downward from the nozzles 33 while moving in the left-right direction 9. Thus, an image is recorded onto the recording surface 107 of the first member 101 being conveyed on the platen 34. In this manner, the recording part 30 records an image onto the first member 101 drawn out from the first roll 111.

### First to Fourth Conveyance Rollers 41 to 44

The first conveyance rollers 41 are disposed above second conveyance rollers 42 in the up-down direction 7 and in rear of the second conveyance rollers 42 in the front-rear direction 8. The second conveyance rollers 42 are disposed in rear of the recording part 30 in the front-rear direction 8. Third conveyance rollers 43 and fourth conveyance rollers 44 are disposed between the recording part 30 and the bonding part 50 in the front-rear direction 8. The fourth conveyance rollers 44 are disposed in front of the third conveyance rollers 43 in the front-rear direction 8.

The first conveyance rollers 41 include a first roller 411 and a second roller 412. The first roller 411 is disposed in the housing 11, and the second roller 412 is disposed on the first cartridge 114. In a state that the first cartridge 114 is mounted to a predetermined position in the housing 11, the first roller 411 is positioned diagonally below the second roller 412. The first member 101 passes between the first roller 411 and the second roller 412. At this time, the first conveyance rollers 41 grip the first member 101. The second roller 412 receives driving force from a motor for conveyance 83 (see FIG. 5) and rotates about an axis extending in the left-right direction 9. Consequently, the first roller 411 also rotates about an axis extending in the left-right direction 9. At this time, a force in an orientation of drawing the first member 101 out from the first roll 111, or force in an orientation of moving the first member 101 closer to the first roll 111, is applied to the first member 101 from the first conveyance rollers 41.

In the first cartridge 114, the first member 101 drawn out from the first roll 111 is set below the second roller 412. Meanwhile, before the first cartridge 114 has been mounted in the housing 11, an upper surface of the first roller 411 is exposed in the housing 11. Therefore, concurrently with mounting of the first cartridge 114 in the housing 11, the first member 101 is pinched between the first roller 411 and the second roller 412. Thus, a user does not need to perform an operation to pinch the first member 101 with the first roller 411 and the second roller 412.

The second conveyance rollers 42 include a third roller 421 and a fourth roller 422. The third roller 421 is located directly above the fourth roller 422. The first member 101 passes between the third roller 421 and the fourth roller 422. At this time, the second conveyance rollers 42 grip the first member 101. The fourth roller 422 receives driving force from the motor for conveyance 83 to rotate about an axis extending in the left-right direction 9. Consequently, the third roller 421 also rotates about an axis extending in the left-right direction 9. At this time, a force in an orientation of drawing the first member 101 out from the first roll 111 or a force in an orientation of moving the first member 101 closer to the first roll 111 is applied from the second conveyance rollers 42 to the first member 101.

The third conveyance rollers 43 include a fifth roller 431 and a sixth roller 432. The fourth conveyance rollers 44 include a seventh roller 441 and an eighth roller 442. Descriptions for configurations and functions of the third conveyance rollers 43 and the fourth conveyance rollers 44 are omitted since they are the same as those of the second conveyance rollers 42.

In the above description, a roller, of the two rollers included in each of the first conveyance rollers 41 to the fourth conveyance rollers 44, to be in contact with the back surface 108 of the first member 101 receives driving force from the motor for conveyance 83. Alternatively, rollers to be in contact with the recording surface 107 of the first member 101 may receive driving force from the motor for conveyance 83, or both of the two rollers may receive driving force from the motor for conveyance 83.

The first member 101 drawn out from the first roll 111 passes between the two rollers in the first conveyance rollers 41, between a guide member 45 and a guide roller 46, and between the two rollers in each of the second conveyance rollers 42 to the fourth conveyance rollers 44, and then reaches the bonding part 50. Meanwhile, the second member 102 drawn out from the second roll 121 is guided by a guide roller 47, and reaches the bonding part 50.

### Bonding Part 50

The bonding part 50 is disposed downstream in the first conveyance route 48 of the recording part 30. In the front-rear direction 8, the bonding part 50 is disposed between the first cutting part 61 and the second cutting part 62. The bonding part 50 includes the first bonding roller 51 and a second bonding roller 52. The second bonding roller 52 is disposed in the housing 11, and the first bonding roller 51 is disposed on the second cartridge 124. In a state that the second cartridge 124 is mounted to a predetermined position in the housing 11, the first bonding roller 51 is located diagonally above the second bonding roller 52. The first member 101 and the second member 102 pass between the first bonding roller 51 and the second bonding roller 52. At this time, the recording surface 107 of the first member 101 faces upward, and the bonding surface 109 of the second member 102 faces downward.

In the second cartridge 124, the second member 102 drawn out from the second roll 121 is set below the first bonding roller 51. Meanwhile, before the second cartridge 124 has been mounted in the housing 11, an upper surface of the second bonding roller 52 is exposed in the housing 11. Therefore, concurrently with mounting of the second cartridge 124 in the housing 11, the second member 102 is pinched between the first bonding roller 51 and the second bonding roller 52. Thus, a user does not need to perform an operation to pinch the second member 102 with the first bonding roller 51 and the second bonding roller 52.

The second bonding roller 52 receives driving force from the motor for bonding 84 (see, FIG. 4) to rotate about an axis extending in the left-right direction 9. Consequently, the first bonding roller 51 also rotates about an axis extending in the left-right direction 9. The first bonding roller 51 and the second bonding roller 52 bond the first member 101 and the second member 102 by bringing the recording surface 107 of the first member 101 and the bonding surface 109 of the second member 102 into close contact. The first bonding roller 51 may receive driving force from the motor for bonding 84, or both the first bonding roller 51 and the second bonding roller 52 may receive driving force from the motor for bonding 84.

The bonding part 50 of the above description need not necessarily bond the first member 101 and the second member 102 together. For example, in an aspect in which the laminating apparatus 1 has a part configured to perform heat adhesion or pressure bonding disposed downstream of rollers corresponding to the bonding part 50 of the above description, a pair of rollers positioned upstream of such part and used to overlap the first member 101 and the second member 102 will be the bonding part 50 of such aspect.

### First Cutting Part 61 and Second Cutting Part 62

The first cutting part 61 is disposed downstream in the first conveyance route 48 of the recording part 30. The first cutting part 61 is disposed between the third conveyance rollers 43 and the fourth conveyance rollers 44 in the front-rear direction 8. The first cutting part 61 cuts the first member 101 at a position between the second conveyance rollers 42 and the bonding part 50. The second cutting part 62 is disposed downstream in the first conveyance route 48 of the bonding part 50. The second cutting part 62 is disposed in front of the bonding part 50 in the front-to-rear direction 8. The second cutting part 62 simultaneously cuts the first member 101 and the second member 102 that have been bonded together at the bonding part 50.

The first cutting part 61 has any configuration capable of cutting the first member 101. The second cutting part 62 has any configuration capable of cutting both the first member 101 and the second member 102. The first cutting part 61 and the second cutting part 62 may include, for example, a cutter carriage that receives driving force from a motor for cutting 86 (see FIG. 4) to move in the left-right direction 9, and a cutter mounted on the cutter carriage; or may include a movable blade that receives driving force from the motor for cutting 86 to move in the up-down direction 7 and a fixed blade opposed to the movable blade.

### Controller 90 and Peripherals

As illustrated in FIG. 4, the controller 90 includes a CPU 91, a ROM 92, a RAM 93, and an EEPROM 94. The ROM 92 stores, for example, programs for controlling various operations of the laminating apparatus 1. The EEPROM 94 stores various data used for executing the above programs. The RAM 93 is used, for example, as a storage area for temporarily storing various date used when the CPU 91 executes the above programs or an expansion area for data or programs. In a case where the laminating apparatus 1 is powered on, the programs stored in the ROM 92 are copied and transferred to the RAM 93. The CPU 91 executes the programs stored in the RAM 93. Thus, the controller 90 performs various controls.

The operation part 13 and the display part 14 are connected to an ASIC 95. The operation part 13 detects pressing of operation keys and outputs a signal corresponding to the operation key pressed. The controller 90 identifies the operation key pressed based on an output signal from the operation part 13. The display part 14 displays information related to an operation of the laminating apparatus 1 on a screen based on instructions from the controller 90.

The recording head 32 is connected to the ASIC 95. The controller 90 outputs signals corresponding to image data to the recording head 32 via the ASIC 95. The recording head 32 ejects ink from the plurality of nozzles 33 disposed on the recording head 32 in response to signals output from the controller 90.

### Various Motors

A motor for first roll 81, a motor for second roll 82, the motor for conveyance 83, the motor for bonding 84, the motor for CR 85, and the motor for cutting 86 are connected to the ASIC 95. A driving circuits to control these motors are incorporated into the ASIC 95. Regarding each of those motors, the controller 90 outputs drive signal for rotating one of those motors to a drive circuit corresponding to the one of those motors. The driving circuit outputs driving current corresponding to the drive signal output from the controller 90 to a corresponding motor. Thus, the corresponding motor rotates.

The motor for first roll 81 generates power to rotate the first roll 111. The motor for second roll 82 generates power to rotate the second roll 121. The motor for conveyance 83 generates power to rotate the second roller 412, the fourth roller 422, the sixth roller 432, and the eighth roller 442. The motor for bonding 84 generates power to rotate the second bonding roller 52. The motor for CR 85 generates power to move the carriage 31 in the left-right direction 9. The motor for cutting 86 generates power to operate the first cutting part 61 and the second cutting part 62. Note that some of these motors may be configured as one motor.

### Mounting of First Roll 111 and Second Roll 121

The opening 17 at the upper portion of the housing 11 has a size that allows both the first cartridge 114 and the second cartridge 124 to pass through the opening 17 simultaneously. Therefore, the first cartridge 114 and the second cartridge 124 can each be mounted to a predetermined position in the housing 11 by passing through the single opening 17 from an outside of the housing 11. The first roll 111 and the second roll 121 are each capable of being independently attached to and detached from the housing 11. The first cartridge 114 and the second cartridge 124 are supported from below, for example, by a support member (not illustrated) in the housing 11. Note that the opening 17 may be divided into two separate openings. More specifically, the opening 17 may be two openings including an opening having a size through which the first cartridge 114 can pass through, and an opening having a size through which the second cartridge 124 can pass through. The two openings are located at the upper portion of the housing 11. Furthermore, the opening 17 may be divided into three or more openings.

In FIG. 5, some components of the laminating apparatus 1 are omitted. As illustrated in FIG. 5, in a state that the first cartridge 114 is mounted to the housing 11, the first roll 111 is located at the first position 71. In a state that the second cartridge 124 is mounted to the housing 11, the second roll 121 is located at the second position 72. Hereinafter, a state that the first roll 111 is located at the first position 71 is referred to as a "first roll 111 mounted state"; a state that the second roll 121 is located at the second position 72 is referred to as a "second roll 121 mounted state"; and a state that the first roll 111 is located at the first position 71 and the second roll 121 is located at the second position 72 is referred to as a "two rolls mounted state".

As illustrated in FIG. 5, in the first roll 111 mounted state, the first shaft 112 of the first roll 111 extends in the left-right direction 9. In the second roll 121 mounted state, the second shaft 122 of the second roll 121 extends in the left-right direction 9. The left-right direction 9 is an example of a horizontal direction. Thus, the first roll 111 is accommodated in the first cartridge 114 and mounted to the first position 71 in a posture that the first shaft 112 extends in a horizontal direction. The second roll 121 is accommodated in the second cartridge 124 and mounted to the second position 72 in a posture that the second shaft 122 extends in a horizontal direction.

The first cartridge 114 has a handle 115 for a user to grip. The second cartridge 124 has a handle 125 for the user to grip. The handle 115 and the handle 125 have mutually different shapes so that the user can distinguish the handle 115 and the handle 125 easily. In the first roll 111 mounted state, the handle 115 is located between the front wall 15 of the housing 11 and the first shaft 112 in the front-rear direction 8. Substantially a whole of the handle 115 is located above the opening 17. In the second roll 121 mounted state, the handle 125 is located between the front wall 15 and the second shaft 122 in the front-rear direction 8. An upper end of the handle 115 is located above an upper end of the handle 125. Furthermore, the upper end of the handle 115 is located above an upper end of the second roll 121 and an upper end of the flange 123. A portion of the handle 125 is located above the opening 17. Note that the handle 115 and the handle 125 may have the same shape as each other. At least a portion of the handle(s) 115, 125 may be positioned above the opening 17. The handle 125 is an example of a first handle. The handle 125 is an example of a second handle.

The front-rear direction 8 is a direction crossing the up-down direction 7 and the front wall 15. In the two rolls mounted state, the second roll 121 is located between the front wall 15 and the first roll 111 in the front-rear direction 8. The first shaft 112 is located above the second shaft 122 in the up-down direction 7. A portion of the first roll 111 and a portion of the second roll 121 are located above the opening 17. The cover 12 covers a portion of the first roll 111 located above the opening 17 in the first roll 111 mounted state, a portion of the second roll 121 located above the opening 17 in the second roll 121 mounted state, and the opening 17. In the two rolls mounted state, the first shaft 112 and the second shaft 122 are located above the recording part 30 and the bonding part 50 in the up-down direction 7.

The first conveyance route 48 conveys the first member 101 drawn out from the first roll 111 mounted to the first position 71, via a position below the first roll 111 in the up-down direction 7 and a position in rear of the first shaft 112 in the front-rear direction 8. The second conveyance route 49 conveys the second member 102, drawn out from the second roll 121 mounted to the second position 72, via a position below the second roll 121 in the up-down direction 7 and a position in front of the second shaft 122 in the front-rear direction 8. In the first roll 111 mounted state, the first member 101 wound in the first roll 111 is drawn out from a position in front of the first roll 111 in the front-rear direction 8.

The second conveyance roller 42 is disposed upstream in the conveyance route 48 of the recording part 30. In the two rolls mounted state, a horizontal distance d1 between the first shaft 112 and the second shaft 122 is shorter than a horizontal distance d2 between the second conveyance rollers 42 and the bonding part 50.

In a case where a user mounts the first roll 111 to the housing 11, the user moves the first cartridge 114 downward. In a case where a user mounts the second roll 121 to the housing 11, the user moves the second cartridge 124 downward. At this time, a movement route of the first cartridge 114 does not overlap with a movement route of the second cartridge 124. Therefore, the first roll 111 can be attached to and detached from the first position 71 in the second roll 121 mounted state. The second roll 121 can be attached to and detached from the second position 72 in the first roll 111 mounted state.

### Springs 118, 128

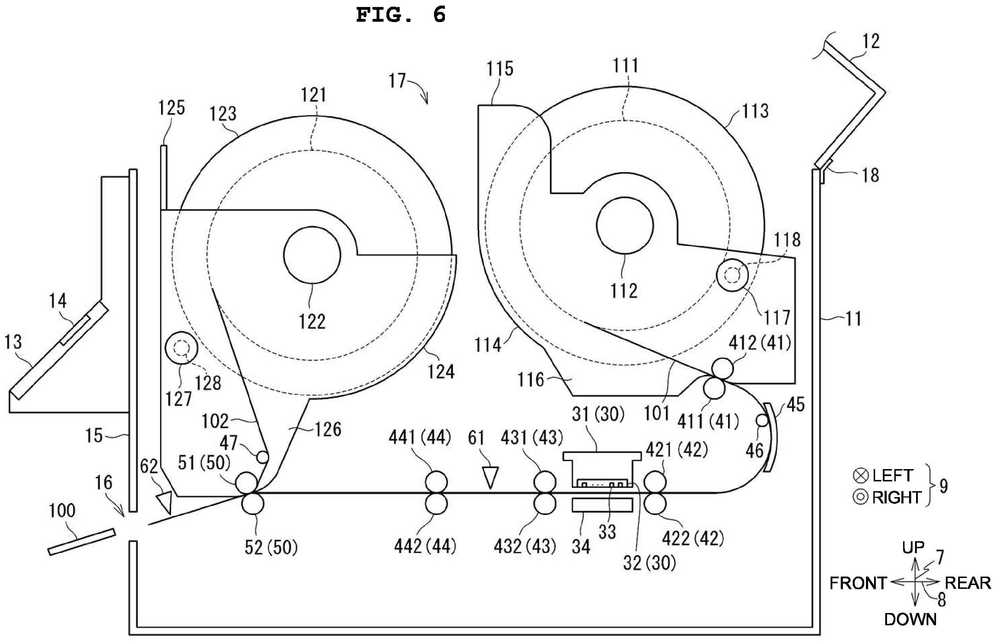

As illustrated in FIG. 6, the first cartridge 114 has a protrusion 117 on a right wall 116. The second cartridge 124 has a protrusion 127 on a right wall 126. An interior of each of the protrusion 117 and the protrusion 127 is hollow. A spring 118, capable of expanding and contracting in the left-right direction 9, is disposed within the hollow portion of the protrusion 117. A spring 128, capable of expanding and contracting in the left-right direction 9, is disposed within the hollow portion of the protrusion 127.

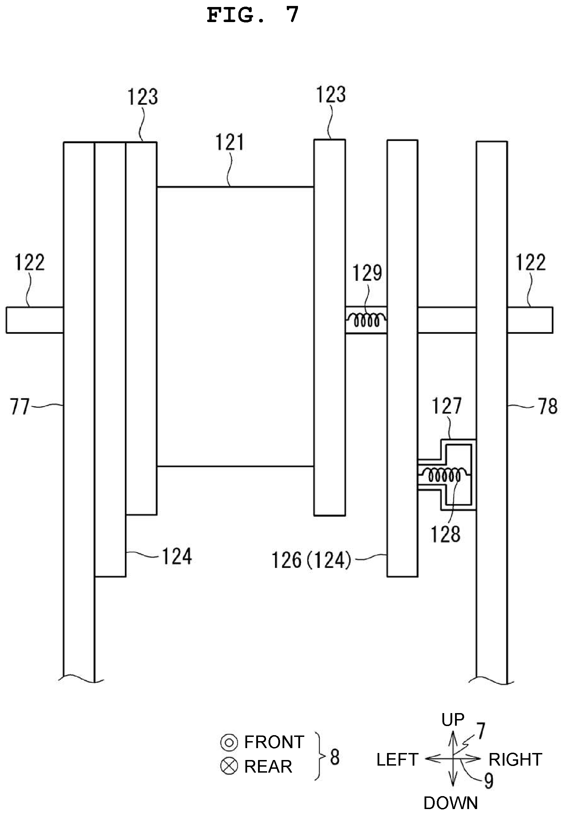

As illustrated in FIG. 7, a left end of the spring 128 is fixed to a right surface of the right wall 126 of the second cartridge 124. A right end of the spring 128 contacts a left surface of the right wall of the protrusion 127. A right surface of the right wall of the protrusion 127 contacts a right frame 78 fixed to the housing 11. A spring 129 attached to the second shaft 122 is disposed between a right flange 123 of the second roll 121 and the right wall 126 of the second cartridge 124. The second roll 121 is biased leftward by the spring 129. Consequently, a left flange 123 of the second roll 121 contacts a right surface of a left wall of the second cartridge 124. The second cartridge 124 is biased leftward by the spring 128. Consequently, a left surface of the left wall of the second cartridge 124 contacts a left frame 77 fixed to the housing 11. With this configuration, position of the second roll 121 in the left-right direction 9 is set.

As illustrated in FIG. 6, the spring 128 is disposed in front of the second shaft 122 in the front-rear direction 8. The handle 125 of the second cartridge 124 is also located in front of the second shaft 122 in the front-rear direction 8. In such a manner, the spring 128 and the handle 125 are located on the same side relative to the second shaft 122 in the front-rear direction 8. Note that the spring 128 is an example of a biasing member. The left-right direction 9 is an example of a first direction. A leftward orientation is an example of an orientation along the first direction.

### Laminating Process by Controller 90

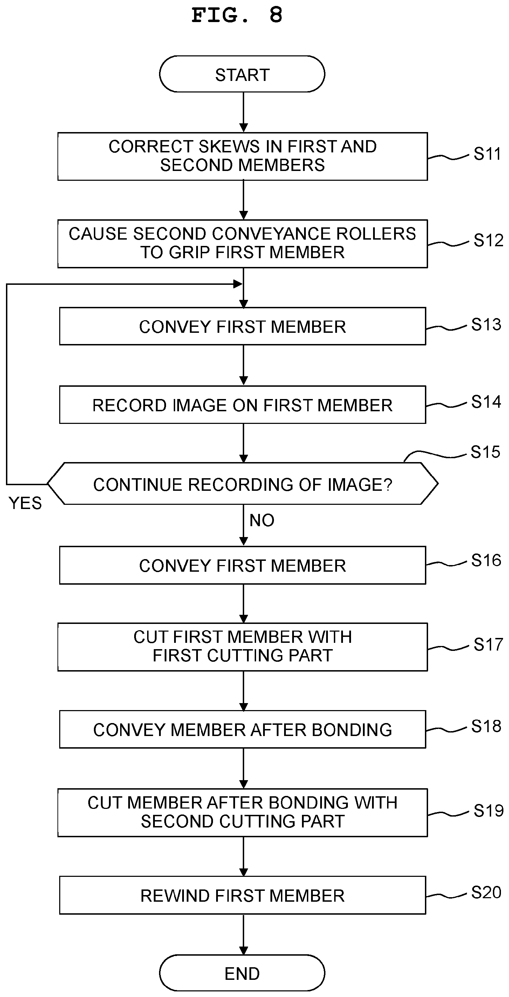

A laminating process performed by the controller 90 is described with reference to FIG. 8. The laminating process illustrated in FIG. 8 is executed by the controller 90 executing the program stored in the RAM 93. The controller 90 executes the laminating process, for example, in a case where the controller 90 receives instructions to execute the laminating process from the operation part 13. Note that since the third conveyance rollers 43 and the fourth conveyance rollers 44 play a minor role in the laminating process, descriptions concerning the third conveyance rollers 43 and the fourth conveyance rollers 44 are omitted below.

Before starting use of the laminating apparatus 1, a user mounts the first roll 111 to the first position 71 by mounting the first cartridge 114 to a predetermined location in the housing 11. The user also mounts the second roll 121 to the second position 72 by mounting the second cartridge 124 to a predetermined position in the housing 11. Furthermore, the user inserts a forward end of the first member 101 drawn out from the first roll 111 into a space between the first roller 411 and the second roller 412, and inserts a forward of the second member 102 drawn out from the second roll 121 into a space between the first bonding roller 51 and the second bonding roller 52.

At the beginning of the laminating process, the controller 90 corrects skews of the first member 101 and the second member 102 (step S11). In the step S11, the controller 90 drives the motor for first roll 81 and the motor for conveyance 83 to alternately perform a process of drawing the first member 101 out from the first roll 111 and a process of rewinding the first member 101 onto the first roll 111 at least once each, thereby correcting the skew of the first member 101.

Furthermore, in the step S11, the controller 90 drives the motor for second roll 82 and the motor for bonding 84 to alternately perform a process of drawing the second member 102 out from the second roll 121 and a process of rewinding the second member 102 onto the second roll 121 at least once each, thereby correcting the skew of the second member 102.

Note that, in the step S11, the controller 90 may execute the skew correction for the first member 101 and the skew correction for the second member 102 in parallel, or may execute one of the skew corrections for the first member 101 and the second member 102 first, and then execute the other of the skew corrections.

Next, the controller 90 causes the second conveyance rollers 42 to grip the first member 101 (step S12). In the step S12, the controller 90 drives the motor for conveyance 83 to apply a force in an orientation of drawing out the first member 101 to the first conveyance rollers 41. In a case where the forward end of the first member 101 reaches the second conveyance rollers 42, the second conveyance rollers 42 grip the first member 101. In the step S12, the controller 90 drives the motor for first roll 81 to apply a force in an orientation of rewinding the first member 101 to the first roll 111. However, the force in the orientation of rewinding the first member 101 is smaller than a force in the orientation of drawing out the first member 101.

Next, the controller 90 conveys the first member 101 (step S13). In the step S13, the controller 90 drives the motor for conveyance 83 to rotate the first conveyance rollers 41 and the second conveyance rollers 42, to cause the first conveyance rollers 41 and the second conveyance rollers 42 to convey the first member 101.

Next, the controller 90 stops conveying of the first member 101, and drives the recording part 30 to cause the recording part 30 to record an image onto the first member 101 (step S14). In the step S14, the controller 90 stops driving of the motor for conveyance 83 to stop the rotations of the first conveyance rollers 41 and the second conveyance rollers 42, and consequently to stop the first member 101. In a period in which the first member 101 is stopped, ink is ejected from the recording head 32 of the recording part 30 onto the recording surface 107 of the first member 101. Thus, an image is recorded on a portion of the recording surface 107 of the first member 101.

Next, the controller 90 determines whether to continue recording of an image (step S15). In a case where the controller 90 determines to continue recording of an image (step S15: YES), the controller 92 proceeds to the step S13. The controller 90 repeatedly executes the step S13 and the step S14 until the controller 91 performs NO determination in the step S15. With this procedure, images are sequentially recorded on the first member 101 from a downstream position to an upstream position in the conveyance direction.

After executing the step S13, the controller 90 determines whether the forward end of the first member 101 has reached the bonding part 50 based on an output signal from an unillustrated sensor. In a case where the controller 90 determines that the forward end of the first member 101 has reached the bonding part 50, the controller 90 starts driving of the bonding part 50. Thereafter, the controller 90 drives the motor for bonding 84 to apply force in an orientation of drawing out the second member 102 to the bonding part 50. At this time, the controller 90 drives the motor for second roll 82 to apply a force in an orientation of rewinding the second member 102 to the second roll 121. However, the force in the orientation of rewinding the second member 102 is smaller than the force in the orientation of drawing out the second member 102. After the controller 90 starts the driving of the bonding part 50, the bonding part 50 bonds the recording surface 107 of the first member 101 and the bonding surface 109 of the second member 102.

In a case where the controller 90 determines in the step S15 that image recording is not to be continued (step S15: No), the controller 90 proceeds to a step S16. In this case, the controller 90 conveys the first member 101 until a cutting position located upstream of a range in which an image has been recorded on the first member 101 reaches a position below the first cutting part 61 (step S16).

Next, the controller 90 causes the first cutting part 61 to cut the first member 101 (step S17). In the step S17, the controller 90 drives the motor for cutting 86 to operate the first cutting part 61. The first cutting part 61 cuts the first member 101 at a cutting position.

Next, the controller 90 conveys the first member 101 and second member 102 bonded to each other (step S18). In the step S18, the controller 90 drives the motor for bonding 84 to convey the first member 101 and the second member 102 bonded to each other until the cutting position of the first member 101 and the second member 102 bonded to each other reaches a position below the second cutting part 62.

Next, the controller 90 causes the second cutting part 62 to cut the first member 101 and the second member 102 bonded to each other (step S19). In the step S19, the controller 90 drives the motor for cutting 86 to operate the second cutting part 62. The second cutting part 62 cuts the first member 101 and the second member 102 bonded to each other at the cutting position.

Next, the controller 90 rewinds the first member 101 onto the first roll 111 (step S20). In the step S20, the controller 90 drives the motor for conveyance 83 inversely, causing the first conveyance rollers 41 and the second conveyance rollers 42 to rotate inversely. The first conveyance rollers 41 and the second conveyance rollers 42 apply a force in an orientation of winding the first member 101 to the first member 101. At this time as well, the force in the orientation of winding the first member 101 is applied from the motor for first roll 81 to the first roll 111.

### Effect of Embodiment

As described above, the laminating apparatus 1 according to the embodiment includes the housing 11, the cover 12, the recording part 30, and the bonding part 50. The housing 11 has the opening 17 at the upper portion of the housing 11, and accommodates the recording part 30 and the bonding part 50. In the laminating apparatus 1, the first roll 111 and the second roll 121 can be mounted to the first position 71 and the second position 72 in the housing 11, respectively, by passing through the single opening 17 from an outside of the housing 11. Furthermore, the first roll 111 and the second roll 121 are each configured to be independently attached to and detached from the housing 11. Therefore, according to the laminating apparatus 1 of the embodiment, a user can replace two individually mountable rolls (that is, the first roll 111 and the second roll 121) in a small space.

The first roll 111 is mountable to the first position 71 in a posture that the first shaft 112 extends in a horizontal direction, and the second roll 121 is mountable to the second position 72 in a posture that the second shaft 122 extends in a horizontal direction. Therefore, the user can mount the first roll 111 and the second roll 121 individually in the postures that the first shaft 112 and the second shaft 122 lie horizontally.

Furthermore, the first roll 111 can be mounted to the first position 71 in a state that the first roll 111 is accommodated in the first cartridge 114 having the handle 115 (first handle). The second roll 121 can be mounted to the second position 72 in a state that the second roll 121 is accommodated in the second cartridge 124 having the handle 125 (second handle). Since the first cartridge 114 and the second cartridge 124 have their own handles 115 and 125, respectively, a user can easily attach and detach the first cartridge 114 by using the handle 115 and easily attach and detach the second cartridge 124 by using the handle 125. With this configuration, the user can replace only one of the first roll 111 and the second roll 121 without unnecessary trouble when desired.

In the first roll 111 mounted state (that is, the state that the first roll 111 is mounted to the first position 71), at least a portion of the handle 115 is located above the opening 17. In the second roll 121 mounted state (that is, the state that the second roll 121 is mounted to the second position 72), at least a portion of the handle 125 is located above the opening 17. Therefore, a user can easily attach and detach the first cartridge 114 by using the handle 115 and easily attach and detach the second cartridge 124 by using the handle 125.

The housing 11 has the front wall 15 on which the operation part 13 and the discharge port 16 are disposed. In the first roll 111 mounted state, the handle 115 is located between the front wall 15 and the first shaft 112 in the front-rear direction 8 (that is, a direction crossing the up-down direction 7 and the front wall 15). In the second roll 121 mounted state, the handle 125 is located between the front wall 15 and the second shaft 122 in the front-rear direction 8. Since the handle 115 of the first cartridge 114 is located at a front part of the first cartridge 114 and the handle 125 of the second cartridge 124 is located at a front part of the second cartridge 124, a user can easily grasp the handle 115 and the handle 125 from a position in front of the laminating apparatus 1 where the user usually stands when operating the laminating apparatus 1. This allows the user to easily attach and detach the first cartridge 114 by using the handle 115, and easily attach and detach the second cartridge 124 by using the handle 125.

The second cartridge 124 includes the spring 128 (biasing member) configured to bias the second cartridge 124 leftward (in an orientation along a first direction). In the second roll 121 mounted state, the spring 128 and the handle 125 are located on the same side relative to the second shaft 122 in the front-rear direction 8. Therefore, a user can easily attach and detach the second cartridge 124 with respect to the laminating apparatus 1 by using the handle 125 without being hindered by the spring 128. Note that the spring 128 does not necessarily locate on the same side as the second shaft 122 in the front-rear direction 8. Furthermore, the spring 128 that biases the second cartridge 124 leftward (in the orientation along the first direction) may be disposed on the housing 11 instead of on the second cartridge 124.

Furthermore, in the two rolls mounted state (that is, the state that the first roll 111 is mounted to the first position and the second roll 121 is mounted to the second position), the second roll 121 is located in the front-rear direction 8 between the front wall 15 and the first roll 111. Therefore, a user can easily reach the second roll 121 located in front of the first roll 111. The first roll 111 is a roll of transparent film onto which an image is to be recorded, while the second roll 121 is a roll of a base, for the transparent film, onto which no image is to be recorded. The second roll 121 supplying the base can be made of various materials, such as paper, magnet, plastic, or hologram-coated material, offering wider variety than the first roll 111. Consequently, the second roll 121 is replaced by a user more frequently than the first roll 111. Therefore, by disposing the second roll 121 in front of the first roll 111, a user can perform replacement with less trouble.

In the two rolls mounted state, the first shaft 112 is located above the second shaft 122 in the up-down direction 7. Since the first roll 111 located in rear of the second roll 121 is located at a position higher than a position of the second roll 121 in front of the first roll 111, a user can easily reach the first roll 111.

At least a portion of the first roll 111 mounted to the first position 71 is located above the opening 17, and at least a portion of the second roll 121 mounted to the second position 72 is located above the opening 17. Therefore, a distance to draw out the first roll 111 and a distance to draw out the second roll 121 are shortened, which allows a user to easily attach and detach both the first roll 111 and the second roll 121. Furthermore, since portions of the first roll 111 and the second roll 121 are located above the opening 17 in a case where the cover 12 is opened, the user can easily check a remaining amount and a type of each roll without having to look inside the housing 11 through the opening 17.

The cover 12 covers a portion of the first roll 111 located above the opening 17 in the first roll 111 mounted state, a portion of the second roll 121 located above the opening 17 in the second roll 121 mounted state, and the opening 17. Thus, the first roll 111, the second roll 121, the first member wound in the first roll 111, and the second member 102 wound in the second roll 121 can be protected by the cover 12.

In the two rolls mounted state, the first shaft 112 and the second shaft 122 are located above the recording part 30 and the bonding part 50 in the up-down direction 7. Therefore, a user can replace the first roll 111 and the second roll 121 without being obstructed by the recording part 30 and the bonding part 50.

Furthermore, the first conveyance route 48 of the laminating apparatus 1 conveys the first member 101 drawn out from the first roll 111 mounted to the first position 71, via a position below the first roll 111 in the up-down direction 7 and a position in rear of the first shaft 112 in the front-rear direction 8. The second conveyance route 49 conveys the second member 102, drawn out from the second roll 121 mounted to the second position 72, via a position below the second roll 121 in the up-down direction 7 and a position in front of the second shaft 122 in the front-rear direction 8. Therefore, the first member 101 can be conveyed via the position below the first roll 111 and the position in rear of the first shaft 112, and the second member 102 can be conveyed via the position below the second roll 121 and the position in front of the second shaft 122.

In the first roll 111 mounted state, the first member 101 wound in the first roll 111 is drawn out from a position in front of the first roll 111 in the front-rear direction 8. Therefore, the first member 101 wound in the first roll 111 can be drawn out from the position in front of the first roll 111 and can be conveyed to the bonding part 50.

The laminating apparatus 1 includes the first conveyance route 48 (conveyance route) configured to convey the first member 101 drawn out from the first roll 111, and the second conveyance rollers 42 (conveyance roller) disposed upstream in the first conveyance route 48 of the recording part 30. In the two rolls mounted state, the horizontal distance d1 between the first shaft 112 and the second shaft 122 is shorter than the horizontal distance d2 between the second conveyance rollers 42 and the bonding part 50. Therefore, by positioning the first roll 111 and the second roll 121 closer to each other in an area between the second conveyance rollers 42 and the bonding part 50, the laminating apparatus 1 can be downsized

The first roll 111 can be attached to and detached from the first position 71 in the second roll 121 mounted state, and the second roll 121 can be attached to and detached from the second position 72 in the first roll 111 mounted state. Therefore, a user can freely attach and detach the second roll 121 without being obstructed by the first roll 111 attached, and can freely attach and detach the first roll 111 without being obstructed by the second roll 121 attached.

For minimizing a size of an apparatus configured to attach and detach two rolls from above as much as possible, arranging the two rolls close to the front, rear, left, and right walls of the housing 11 is preferable. Furthermore, a factor that contributes to downsizing of an apparatus most significantly is arranging various components of the laminating apparatus 1 (for example, the recording part 30, the first to fourth conveyance rollers 41 to 44, and the bonding part 50) in positions that overlap with the two rolls in plan view. However, in a configuration in which the first conveyance rollers 41 and the first roll 111 overlap with each other in plan view, after the first roll 111 is mounted in the housing 11, a user has difficulty in performing an operation of causing the first conveyance rollers 41 to grip the first member 101 from above, because the first roll 111 becomes an obstruction. Similarly, in a configuration in which the bonding part 50 and the second roll 121 overlap with each other in plan view, after the second roll 111 is mounted in the housing 11, a user has difficulty in performing an operation of causing the first bonding roller 51 and the second bonding roller 52 to grip the second member 102 from above, because the second roll 121 becomes an obstruction.

As a method for solving the above problem, for example, providing a door for accessing an interior of the housing 11 on for example a side wall of the housing 11 is conceivable. However, this method has the problem of complicating user operation and requiring a larger work space. In the laminating apparatus 1 of the present embodiment, one of the two rollers constituting the first conveyance rollers 41 (the second roller 412) is disposed in the first cartridge 114, and the first member 101 is pinched between the first roller 411 and the second roller 412 coincident with mounting of the first cartridge 114 in the housing 11. Further, one of the two rollers constituting the bonding part 50 (the first bonding roller 51) is disposed in the second cartridge 124, and the second member 102 is pinched between the first bonding roller 51 and the second bonding roller 52 coincident with mounting of the second cartridge 124 in the housing 11. With this configuration, downsizing and reduction of a work space are both achieved in the laminating apparatus 1 configured to mount two rolls independently from above, and operability for users can be improved.

### Modifications

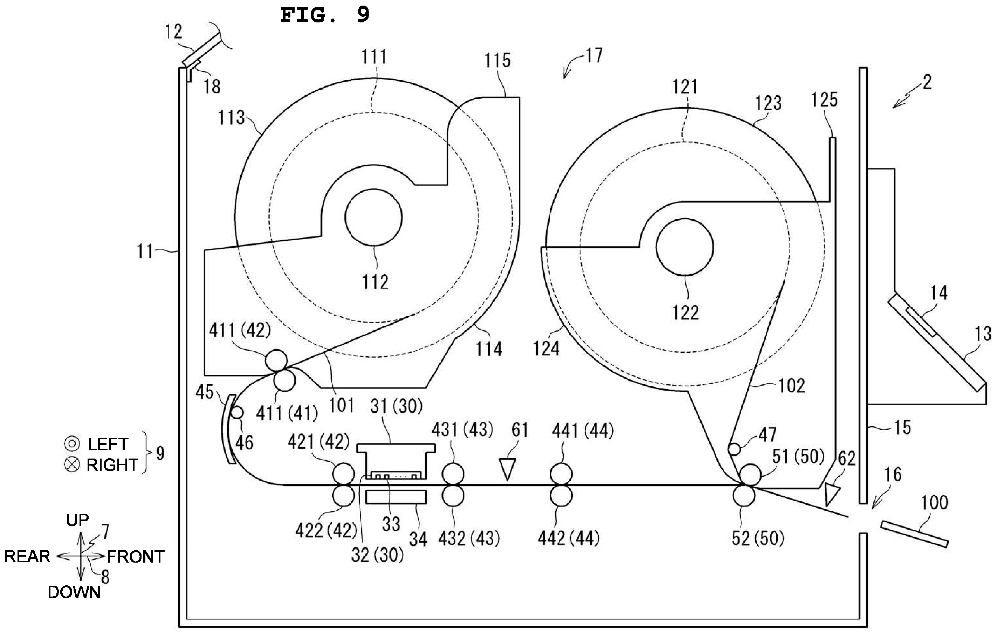

Various modifications can be made to the laminating apparatus 1 according to the above embodiment. In the laminating apparatus 2 according to a modification illustrated in FIG. 9, a whole of the first roll 111 mounted to the first position 71 and a whole of the second roll 121 mounted to the second position 72 are located below the opening 17. Therefore, according to the laminating apparatus 2 of the modification, even if the laminating apparatus 2 is dropped during transportation, the first roll 111 and the second roll 121 can be protected.

The housing 11 of the laminating apparatus according to the modification may have a shape other than the rectangular parallelepiped box shape without the upper surface. For example, the housing 11 may have a box shape lacking a portion of an upper surface of the housing 11. The housing 11 may have multiple openings 17 at its upper portion. In this case, the first roll 111 and the second roll 121 may be mountable to a predetermined positions in the housing 11 by passing through one of the multiple openings 17. An opening 17 through which the first roll 111 passes and an opening 17 through which the second roll 121 passes may be the same as each other or different from each other. Furthermore, the cover 12 may have shapes other than that illustrated in FIG. 3. For example, the cover 12 may be slidable in the left-right direction 9 or rearward (sliding structure), or may have a left portion that opens to the left and a right portion that opens to the right (double-doors structure).

In a laminating apparatus according to the modification, the first roll 111 may be mounted to a predetermined position in a posture that the first shaft 112 extends in a direction other than a horizontal direction, and the second roll 121 may be mounted to a predetermined position in a posture that the second shaft 122 extends in a direction other than a horizontal direction. Furthermore, a whole of the handle 115 or a whole of the handle 125 may be located below the opening 17. Furthermore, the handle 115 and the handle 125 may be located in rear of the first shaft 112 and the second shaft 122, respectively, in the front-rear direction 8. The spring 118 and the handle 115 may be located on the same side relative to the first shaft 112, and the spring 128 and the handle 125 may be located on different sides from each other relative to the second shaft 122. The first cartridge 114 and the second cartridge 124 may not have handles. The first roll 111 may be located between the front wall 15 and the second roll 121 in the front-rear direction 8. The second shaft 122 may be located above the first shaft 112 in the up-down direction 7.

In the laminating apparatus according to the modification, the first conveyance route 48 may convey the first member 101 drawn out from the first roll 111 via a position below the first roll 111 in the up-down direction 7 and a position in front of the first shaft 112 in the front-rear direction 8. The second conveyance route 49 may convey the second member 102 drawn out from the second roll 121 via a position below the second roll 121 in the up-down direction 7 and a position in rear of the second shaft 122 in the front-rear direction 8. The first member 101 drawn out from the first roll 111 may be drawn out from a position in rear of the first roll 111 in the front-rear direction 8. The horizontal distance d1 between the first shaft 112 and the second shaft 122 may be equal to or greater than the horizontal distance d2 between the second conveyance rollers 42 and the bonding part 50.

A user may move the first cartridge 114 in the front-rear direction 8 or the left-right direction 9 while moving the first cartridge 114 primarily downward, in a case where the first roll 111 is mounted to the housing 11. A user may move the second cartridge 124 in the front-rear direction 8 or the left-right direction 9 while moving the second cartridge 124 primarily downward, in a case where the second roll 111 is mounted to the housing 11. In this case, as long as a movement route of the first cartridge 114 and a movement route of the second cartridge 124 do not overlap with each other, one of the first roll 111 and the second roll 121 can be attached and detached with respect to a predetermined position in a state that the other of the first roll 111 and the second roll 121 is mounted to the housing 11.

### [Reference Signs List]

1, 2 Laminating apparatus
7 Up-down direction
8 Front-rear direction
9 Left-right direction (horizontal direction, first direction)
11 Housing
12 Cover
13 Operation part
15 Front wall
16 Discharge port
17 Opening
30 Recording Part
48 First conveyance route (Conveyance route)
49 Second conveyance route
50 Bonding part
71 First position
72 Second position
90 Controller
100 Laminate finished product (Finished product)
111 First roll
112 First shaft
114 First cartridge
115 Handle (First handle)
118, 128... Spring (Biasing member)
121 Second roll
122 Second shaft
124 Second cartridge
125 Handle (Second handle)
128 Spring (biasing member)

## Claims

1. A laminating apparatus comprising:
a recording part configured to record an image on a first member drawn out from a first roll;
a bonding part configured to bond the first member with the image recorded in the recording part and a second member drawn out from a second roll; and
a housing having an opening defined at an upper portion of the housing, the housing accommodating the recording part and the bonding part,
wherein the first roll and the second roll are mountable to a first position and a second position in the housing, respectively, from an outside of the housing through the opening.

2. The laminating apparatus according to claim 1, wherein
the first roll has a first shaft around which the first member is wound, the first roll being mountable to the first position in a posture that the first shaft extends in a horizontal direction, and
the second roll has a second shaft around which the second member is wound, the second roll being mountable to the second position in a posture that the second shaft extends in a horizontal direction.

3. The laminating apparatus according to claim 2, wherein
the first roll is mountable to the first position in a state that the first roll is accommodated in a first cartridge having a first handle, and
the second roll is mountable to the second position in a state that the second roll is accommodated in a second cartridge having a second handle.

4. The laminating apparatus according to claim 3, wherein
at least a portion of the first handle is located above the opening, in a state that the first roll is mounted to the first position, and
at least a portion of the second handle is located above the opening, in a state that the second roll is mounted to the second position.

5. The laminating apparatus according to claim 3, wherein
the housing has a front wall in which an operation part and a discharge port are disposed, the discharge port being configured to discharge a finished product in which the first member and the second member are bonded to each other,
the first handle is located between the front wall and the first shaft in a front-rear direction, in a state that the first roll is mounted to the first position, the front-rear direction crossing an up-down direction and the front wall, and
the second handle is located between the front wall and the second shaft in the front-rear direction, in a state that the second roll is mounted to the second position.

6. The laminating apparatus according to claim 5, wherein
a cartridge being one of the first cartridge and the second cartridge includes:
a biasing member configured to bias the cartridge in an orientation along a first direction crossing the up-down direction and the front-rear direction; and
a handle being one of the first handle and the second handle, and
the biasing member and the handle are located at a same side in the front-rear direction, relative to a shaft around which a member accommodated in the cartridge is wound, in a state that the first roll is mounted to the first position and the second roll is mounted to the second position.

7. The laminating apparatus according to claim 2, wherein
the housing has a front wall in which an operation part and a discharge port are disposed, the discharge port being configured to discharge a finished product in which the first member and the second member are bonded to each other, and
the second roll is located between the front wall and the first roll in a front-rear direction crossing an up-down direction and the front wall, in a state that the first roll is mounted to the first position and the second roll is mounted to the second position.

8. The laminating apparatus according to claim 7, wherein the first shaft is located above the second shaft in the up-down direction in the state that the first roll is mounted to the first position and the second roll is mounted to the second position.

9. The laminating apparatus according to claim 1, wherein
at least a portion of the first roll mounted to the first position is located above the opening, and
at least a portion of the second roll mounted to the second position is located above the opening.

10. The laminating apparatus according to claim 9 further comprising a cover configured to cover:
a portion, of the first roll, located above the opening in a state that the first roll is mounted to the first position;
a portion, of the second roll, located above the opening in a state that the second roll is mounted to the second position; and
the opening.

11. The laminating apparatus according to claim 2, wherein the first shaft and the second shaft are located above the recording part and the bonding part in an up-down direction, in a state that the first roll is mounted to the first position and the second roll is mounted to the second position.

12. The laminating apparatus according to claim 2, wherein the housing has a front wall in which an operation part and a discharge port are disposed, the discharge port being configured to discharge a finished product in which the first member and the second member are bonded to each other,
the laminating apparatus further comprising:
a first conveyance route configured to convey the first member drawn out from the first roll mounted to the first position via a position below the first roll in an up-down direction and a position in rear of the first shaft in a front-rear direction crossing the up-down direction and the front wall; and
a second conveyance route configured to convey the second member drawn out from the second roll mounted to the second position via a position below the second roll in the up-down direction and a position in front of the second shaft in the front-rear direction.

13. The laminating apparatus according to claim 1, wherein
the housing has a front wall in which an operation part and a discharge port are disposed, the discharge port being configured to discharge a finished product in which the first member and the second member are bonded to each other, and
the first member wound in the first roll is drawn out from a position in front of the first roll in a front-rear direction crossing an up-down direction and the front wall, in a state that the first roll is mounted to the first position.

14. The laminating apparatus according to claim 2 further comprising:
a conveyance route configured to convey the first member drawn out from the first roll mounted to the first position; and
a conveyance roller disposed upstream in the conveyance route of the recording part, wherein
a horizontal distance between the first shaft and the second shaft is shorter than a horizontal distance between the conveyance roller and the bonding part, in a state that the first roll is mounted to the first position and the second roll is mounted to the second position.

15. The laminating apparatus according to claim 1, wherein a whole of the first roll mounted to the first position and a whole of the second roll mounted to the second position are located below the opening.

16. The laminating apparatus according to claim 1, wherein
the first roll is attachable to and detachable from the first position in a state that the second roll is mounted to the second position, and
the second roll is attachable to and detachable from the second position in a state that the first roll is mounted to the first position.

17. The laminating apparatus according to claim 1, wherein the first roll and the second roll are mountable to the first position and the second position, respectively, through the opening being a single opening from the outside of the housing.
